# FASCICULE DE BREVET EUROPEEN

(11) **EP 4 334 210 B1**
(45) Date de publication et mention de la délivrance du brevet: **19.02.2025**
(21) Numéro de dépôt: 22735524.5
(22) Date de dépôt: 25.04.2022
(51) Int. Cl.: B64D 27/10, B60K 6/50, F01D 15/10, F02C 7/32, B64D 35/02, B64D 35/08

(54) **DISPOSITIF DE TRANSMISSION AMÉLIORÉ POUR AÉRONEF HYBRIDE**
VERBESSERTES GETRIEBE FÜR HYBRIDFLUGZEUGE
IMPROVED DRIVE SYSTEM FOR HYBRID AIRCRAFT

(30) Priorité: 06.05.2021 FR 2104791
(43) Date de publication de la demande: 13.03.2024
(73) Titulaire: Safran Helicopter Engines, 64510 Bordes (FR)
(72) Inventeur: FULLERINGER, Benjamin, Nicolas, 77550 MOISSY-CRAMAYEL (FR); MOUTAUX, Antoine, Pascal, 77550 MOISSY-CRAMAYEL (FR); THIRIET, Romain, Jean, Gilbert, 77550 MOISSY-CRAMAYEL (FR)
(74) Mandataire: Cabinet Beau de Loménie
(86) Numéro de dépôt international: PCT/FR2022/050779
(87) Numéro de publication internationale: WO 2022/234210

(56) Documents cités:
- WO-A1-2019/155173
- FR-A1- 2 929 324
- FR-A1- 2 993 727
- FR-A1- 3 099 319
- US-A1- 2019 323 427

## Description

### Domaine Technique

La présente invention concerne le domaine des aéronefs hybridés, comprenant au moins une turbomachine telle qu'un turbomoteur ou un turbopropulseur, pour des engins volants tels des hélicoptères ou avions. En particulier, l'invention concerne un dispositif de transmission pour aéronef hybridé, et un aéronef hybridé comprenant un tel dispositif de transmission.

### Technique antérieure

De manière connue, une turbomachine, par exemple un turbomoteur, notamment pour un hélicoptère, comporte une turbine à gaz ayant un générateur de gaz et une turbine libre entraînée en rotation par le flux de gaz généré par le générateur de gaz. En outre, un aéronef hybridé comprend généralement, en plus de cette turbomachine, une machine électrique réversible couplée au générateur de gaz, de manière à mettre en rotation le générateur de gaz lors d'une phase de démarrage de la turbomachine, ou en vol de manière à assurer les besoins électriques non propulsifs de l'aéronef.

Traditionnellement, le générateur de gaz comporte au moins un compresseur et une turbine couplés en rotation. Le principe de fonctionnement est le suivant : l'air frais entrant dans la turbine à gaz est comprimé du fait de la rotation du compresseur avant d'être envoyé vers une chambre de combustion où il est mélangé à un carburant. Les gaz brûlés du fait de la combustion sont ensuite évacués à grande vitesse. Il se produit alors une première détente dans la turbine du générateur de gaz, durant laquelle cette dernière extrait l'énergie nécessaire à l'entraînement du compresseur. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Lors de la phase de démarrage de la turbomachine, il est nécessaire d'entraîner en rotation le générateur de gaz, c'est-à-dire entraîner en rotation le compresseur couplé à la turbine. Comme mentionné ci-dessus, c'est précisément l'un des rôles de la machine électrique réversible, connue par ailleurs, qui est le plus souvent un moteur électrique apte à fonctionner de manière réversible en génératrice électrique.

L'entraînement en rotation du compresseur par la machine électrique réversible fonctionnant en moteur permet en effet de faire circuler de l'air dans le compresseur et donc d'amener de l'air comprimé dans la chambre de combustion afin d'initier la combustion. Cette combustion produit alors le flux gazeux permettant d'entraîner la turbine en rotation, à la suite de quoi le compresseur est directement entraîné en rotation par la turbine, ce qui signifie que le générateur de gaz fonctionne de manière autonome, traduisant la fin de la phase de démarrage de la turbomachine. Il est connu que les aéronefs, dans lesquels de telles turbomachines sont notamment destinées à être intégrées, comportent des appareillages électriques qu'il est nécessaire d'alimenter par de l'énergie électrique. Par exemple, pour un hélicoptère il est nécessaire d'alimenter en énergie électrique les appareillages électriques qui l'équipent comme par exemple les commandes électriques, le chauffage, la climatisation, le treuil.

Jusqu'à présent, en vol, la machine électrique réversible était utilisée pour fournir de l'électricité aux appareillages électriques. Pour ce faire, la machine électrique fonctionnant cette fois-ci en génératrice électrique était entraînée en rotation par le générateur de gaz, l'énergie cinétique de rotation prélevée sur le générateur de gaz étant transformée en énergie électrique par ladite machine. Pour un hélicoptère cependant, le prélèvement d'énergie sur le générateur de gaz comporte des inconvénients. La variation, au cours du vol, de la puissance mécanique prélevée par la machine électrique sur le générateur de gaz se traduit par un déplacement de la ligne de fonctionnement du moteur dans le champ compresseur. Ce déplacement correspond à une marge au pompage qu'il est nécessaire de provisionner, ce qui a pour conséquence de pénaliser l'optimisation de la ligne de fonctionnement du moteur, en interdisant l'utilisation du compresseur à un taux de pression optimal, et de dégrader de ce fait les performances stabilisées, avec un impact sur la consommation spécifique.

Le document FR2929324 répondait à cette problématique, en permettant à la même machine électrique de démarrer le moteur en entrainant le générateur de gaz, puis de fonctionner en génération électrique en prélevant la puissance sur la turbine libre. Cette solution permet notamment de ne pas prélever de puissance sur le générateur de gaz et ainsi améliorer la consommation spécifique de la turbine à gaz. Cependant, cette architecture ne permet pas d'injection de puissance mécanique sur le rotor principal de l'hélicoptère pour les assistances à l'autorotation par exemple.

L'amélioration de la densité de puissance et de la fiabilité des équipements de la chaine électrique (stockage, conversion, machines électriques) permet désormais d'envisager d'hybrider le rotor principal, c'est-à-dire de disposer d'au moins une machine électrique connectée au rotor principal et pouvant lui apporter de la puissance. Cette puissance, complémentaire de la puissance de la turbine permet notamment un apport de puissance pour des phases transitoires (ressources, décollage...), un apport de puissance pour soulager la turbine à gaz et optimiser sa durée de vie, et également un fonctionnement 100% électrique en cas de perte de la turbine à gaz, pendant une durée limitée. De plus, il est possible d'utiliser cette machine électrique pour générer de l'électricité (pour la consommation courante et/ou pour recharger des batteries).

Pour assurer ces fonctions, la ou les machines électriques doivent être dimensionnées à une puissance très supérieure à celle des génératrices/démarreurs habituellement utilisés, typiquement une ou plusieurs centaines de kilowatts, au lieu d'une dizaine de kilowatts. Il est donc souhaitable de mutualiser les deux types de machines électriques (la génératrice/démarreur de la turbine et la machine électrique connectée au rotor).

Il est connu d'utiliser de telles machines électriques, et notamment plusieurs architectures hybridées, permettant de réaliser différentes fonctions telles que le démarrage du générateur de gaz, la génération d'électricité au sol, ou la fourniture de puissance électrique au rotor principal.

Toutefois, les architectures proposées ne permettent pas la réalisation de certaines fonctions par les machines électriques. En particulier, ces architectures ne permettent à la machine électrique d'apporter de la puissance au générateur de gaz que lors du démarrage. Il n'est pas non plus possible de prélever en continu de la puissance sur le rotor de l'hélicoptère avec une machine électrique et de réinjecter cette puissance sur le générateur de gaz en continu avec une autre machine électrique. Plus précisément, l'assistance au générateur de gaz en vol n'est possible que par l'activation d'au moins une roue libre blocable ou embrayage à chaque utilisation. Or, un tel système de roue libre blocable ou d'embrayage est susceptible d'être utilisé fréquemment, et est associé à une criticité élevée. En d'autres termes, compte tenu de l'utilisation fréquente des fonctions auxquelles ces éléments embrayables sont associés, les risques de dysfonctionnement sont importants, limitant la fiabilité du dispositif. De plus, de telles architectures, n'assurent pas un niveau de redondance optimal, et impliquent également un nombre de composants et de connexions élevé.

Les documents FR3066444 et WO 2019/155173 A1 divulguent d'autres exemples d'architectures hybridées permettant de réaliser des transferts de puissance entre rotors d'une turbomachine.

Toutefois, les architectures proposées dans ce document ne permettent pas d'adresser certaines fonctionnalités propres aux applications hélicoptères dans lesquelles le rotor principal et la turbine libre peuvent être désynchronisés. A titre d'exemple, et de manière non limitative, l'assistance à l'autorotation par les machines électriques en injectant de la puissance dans la transmission, ou la génération électrique pour alimenter les systèmes de bord, en aval de la roue libre moteur, n'est pas permise, notamment suite à une défaillance de la turbomachine.

Enfin, les architectures présentées dans ce document nécessitent deux machines électriques réversibles dans le périmètre moteur, et capables de tourner dans les deux sens de rotation grâce à quatre systèmes d'accouplement débrayables. Cette intégration forte dans le périmètre moteur, ainsi que le nombre d'accouplements nécessaires, est un frein à l'utilisation sur hélicoptère de par la présence de nombreux modes de panne communs.

Il existe donc un besoin pour un dispositif de transmission présentant une architecture répondant au moins en partie aux inconvénients précités.

### Exposé de l'invention

Le présent exposé concerne une turbomachine pour aéronef hybridé, notamment d'hélicoptère, la turbomachine comportant au moins un générateur de gaz, une turbine libre entraînée en rotation par un flux de gaz généré par le générateur de gaz, un rotor principal, et un dispositif de transmission comprenant une première machine électrique réversible apte à être couplée à un arbre de la turbine libre par l'intermédiaire d'un premier moyen de couplage désactivable, et au rotor principal, et une deuxième machine électrique réversible apte à être couplée à un arbre du générateur de gaz par l'intermédiaire d'un deuxième moyen de couplage désactivable, et à être couplée au rotor principal par l'intermédiaire d'un troisième moyen de couplage désactivable, le deuxième moyen de couplage désactivable étant configuré pour être activé lorsque la deuxième machine électrique tourne dans un premier sens de rotation, et le troisième moyen de couplage désactivable étant configuré pour être activé lorsque la deuxième machine électrique tourne dans un deuxième sens de rotation opposé au premier sens de rotation.

Par « moyens de couplage désactivables », on entend que les moyens de couplage peuvent être dans une position activée dans laquelle les organes reliés auxdits moyens de couplage sont couplés, ou dans une position désactivée dans laquelle lesdits organes sont découplés, étant entendu que par "organe" on entend les machines électriques, le rotor principal, le générateur de gaz et la turbine libre.

Le dispositif d'entrainement selon le présent exposé est particulièrement avantageux en ce que les deux machines électriques sont spécialisées afin d'assurer des fonctions complémentaires, tout en assurant ensemble le niveau de redondance nécessaire sur les fonctions critiques pour accroitre la sécurité du vol. Plus précisément, la première machine électrique peut assurer le prélèvement sur la turbine libre ou le rotor principal, de manière à ne pas affecter la performance du générateur de gaz, ou l'injection de puissance sur le rotor principal de manière à assister celui-ci dans certaines phases de fonctionnement. En outre, la deuxième machine électrique peut être utilisée dans un sens de rotation pour être couplée mécaniquement au générateur de gaz, et dans l'autre sens de rotation pour être couplée mécaniquement au rotor principal. En particulier, la deuxième machine électrique tournant dans le premier sens de rotation permet le couplage avec le générateur de gaz afin de démarrer ce dernier au sol, mais également le couplage avec le générateur de gaz afin de compléter la puissance thermodynamique dans certaines phases de vol, pour l'assistance aux phases transitoires ou la modification du point de fonctionnement moteur par exemple.

En outre, la deuxième machine électrique tournant dans le premier sens de rotation permet de redémarrer le générateur de gaz en vol, par exemple suite à une panne de celui-ci, sans nécessiter l'activation d'un autre organe mécanique tel qu'un embrayage. De plus, même lorsque la deuxième machine électrique est utilisée dans le premier sens de rotation pour redémarrer le générateur électrique en vol, la première machine électrique peut être utilisée parallèlement pour entrainer le rotor principal.

Par ailleurs, la deuxième machine électrique tournant dans le deuxième sens de rotation permet d'entrainer le rotor principal en remplacement de la première machine électrique en cas de panne de cette dernière, ou en complément de celle-ci dans certaines phases de vol nécessitant un apport supplémentaire de puissance.

Par conséquent, l'architecture selon le présent exposé présente l'avantage d'être simple en limitant le nombre de composants et de connexions, tout en assurant un bon niveau de redondance et en permettant de réaliser un nombre élevé de fonctions, et ainsi d'améliorer la fiabilité du dispositif. De surcroît, selon l'invention, la deuxième machine électrique réversible permet à la fois de démarrer ou d'assister le générateur de gaz ou le rotor principal. Dans un mode de réalisation particulier, un unique système actif permet également de fournir de l'électricité par prélèvement sur le générateur de gaz pour le rechargement des batteries au sol, ou en cas de défaillance de la première machine électrique par exemple.

Dans certains modes de réalisation, les premier, deuxième et troisième moyens de couplage désactivables comprennent une roue libre.

Un intérêt de la roue libre est qu'elle ne nécessite pas d'être commandée électroniquement ou mécaniquement par un opérateur extérieur. La roue libre présente en outre une fiabilité importante. Une telle roue libre est généralement constituée d'un moyeu et d'une couronne périphérique montée rotative sur le moyeu. Le moyeu pouvant généralement entraîner en rotation la couronne périphérique mais pas l'inverse. Il est à noter que dans certains cas, la roue libre est disposée de telle sorte que la couronne périphérique peut entrainer en rotation le moyeu, mais pas l'inverse, sans remettre en cause le principe de la présente invention. Aussi, le moyeu ne peut entraîner la couronne que lorsque le moyeu tourne dans un sens prédéterminé par rapport à la couronne, que l'on appellera « sens d'engagement ». Dans le cas contraire, le moyeu et la couronne périphérique tournent librement l'un par rapport à l'autre. En l'espèce, les moyens de couplage désactivables sont activés lorsque le moyeu de la roue libre entraîne en rotation la couronne périphérique, et, à l'inverse, les moyens de couplage désactivables sont désactivés lorsque le moyeu de la roue libre n'entraîne pas en rotation la couronne périphérique. Le fait d'utiliser des roues libres comme éléments de couplage entre les différents organes, en l'absence d'autres moyens de couplage tels que des embrayages ou des crabots, permet d'améliorer la fiabilité du dispositif de transmission.

Dans certains modes de réalisation, la première machine électrique est configurée pour fonctionner en mode génératrice, dans lequel elle est entraînée en rotation par des organes de transmission et le rotor principal, pouvant eux-mêmes être entrainés par la turbine libre par l'intermédiaire du premier moyen de couplage, de manière à générer de l'énergie électrique, ou en mode moteur dans lequel elle apporte de la puissance au rotor principal.

La première machine électrique peut ainsi générer de l'énergie électrique sans prélever de la puissance sur le générateur de gaz, ce qui permet d'améliorer la consommation spécifique de la turbine à gaz. De plus, le dispositif de transmission du présent exposé permet un apport de puissance électrique simultané au rotor principal par la première machine électrique, et au générateur de gaz par la deuxième machine électrique.

Dans certains modes de réalisation, le dispositif comprend un frein rotor apte à être disposé entre la turbine libre et le rotor principal en étant mobile entre une position de freinage empêchant l'entrainement du rotor principal par la turbine libre, et une position libre permettant l'entrainement du rotor principal par la turbine libre.

Plus précisément, la première machine électrique et la turbine libre sont couplées au rotor principal, tandis qu'un frein rotor mobile disposé sur la chaine cinématique en permet le blocage. Lors du démarrage, les gaz chauds entrainent la turbine libre. Cette dernière, reliée au rotor principal par l'intermédiaire du premier moyen de couplage, peut être soit libre lorsque le frein rotor est en position libre, soit bloquée par le frein rotor lorsque ce dernier est en position de freinage. Cette position de freinage permet donc de bloquer la turbine libre, et donc le rotor principal, notamment en cas de démarrage par vent fort.

Dans certains modes de réalisation, la première machine électrique est configurée pour tourner dans un sens opposé au sens de rotation du rotor principal, de manière à freiner l'entrainement du rotor principal par la turbine libre. En d'autres termes, la première machine électrique est configurée pour générer un couple résistant, permettant de contrer le couple de la turbine libre entrainant le rotor principal. La première machine électrique peut ainsi remplir les fonctions du frein rotor décrit au paragraphe précédent, sans nécessiter l'emploi de ce dernier. Cette alternative est avantageuse dans la mesure où un frein rotor, qui est un élément couteux, doit être régulièrement vérifié et changé. Il présente également un risque d'activation non souhaitée en vol. Cette alternative permet donc de limiter les coûts et d'améliorer la fiabilité du dispositif.

Dans certains modes de réalisation, le dispositif comprend un crabot, ou un embrayage disposé entre le frein rotor et la turbine libre, le crabot étant mobile entre une position de couplage dans laquelle l'arbre de la turbine libre est couplée avec le rotor principal, et une position de découplage dans laquelle l'arbre de la turbine libre et le rotor principal sont découplés, la première machine électrique étant couplée à la turbine libre en amont du crabot, de manière à ce que la turbine libre puisse apporter de la puissance électrique à la première machine électrique même lorsque le crabot est en position de découplage.

Le terme « amont » se réfère au sens de circulation de l'énergie mécanique vers le rotor principal, en d'autres termes, au sens « turbine libre - rotor principal ». Dans certaines phases opérationnelles, il est nécessaire de pouvoir générer de la puissance électrique en maintenant le rotor bloqué. Le passage du crabot en position de découplage permet ainsi l'utilisation du frein rotor, tout en maintenant la turbine libre allumée pour générer de la puissance électrique sur la première machine électrique, sans endommager la turbine libre.

Dans certains modes de réalisation, la première machine électrique est connectée électriquement à la deuxième machine électrique, de telle manière à ce que le dispositif soit apte à transférer de la puissance électrique du rotor principal au générateur de gaz par l'intermédiaire de la première machine électrique et de la deuxième machine électrique tournant dans le premier sens de rotation.

Dans certaines phases de vol, il peut être souhaitable de transférer de la puissance depuis le rotor principal vers le générateur de gaz. Dans ce cas, la première machine électrique connectée au rotor principal et à la turbine libre prélève de la puissance, transmise sous forme de courant électrique vers la deuxième machine électrique qui la restitue au générateur de gaz via le deuxième moyen de couplage, en tournant dans le premier sens de rotation. Le fait d'échanger de la puissance électrique entre le générateur de gaz et le rotor principal permet de modifier le point de fonctionnement de la turbine pour augmenter la puissance nette vue par le rotor principal à iso durée de vie de la turbine à gaz ou augmenter la durée de vie de la turbine à gaz à iso puissance nette vue par le rotor principal de l'hélicoptère.

Dans certains modes de réalisation, le deuxième moyen de couplage comprend un moyen de blocage mobile entre une position libre dans laquelle le générateur de gaz ne peut pas entraîner en rotation la deuxième machine électrique, et une position bloquée dans laquelle le générateur de gaz est apte à entraîner en rotation la deuxième machine électrique, de manière à ce que la deuxième machine électrique prélève de la puissance électrique au générateur de gaz.

Dans certains modes de réalisation, le dispositif est configuré de telle sorte que la puissance électrique prélevée au générateur de gaz par la deuxième machine électrique est transférée à la première machine électrique.

Le moyen de blocage est un moyen permettant de forcer l'accouplement entre la deuxième machine électrique et le générateur de gaz. Par exemple, lorsque le moyen de couplage comprend une roue-libre et un moyen de blocage, la roue libre est dite « roue libre blocable », de telle sorte qu'en position bloquée, le moyeu de la roue libre peut entraîner en rotation la couronne périphérique de la roue-libre blocable. En d'autres termes, le générateur de gaz est apte à entraîner en rotation la deuxième machine électrique. Autrement dit, la deuxième machine électrique peut être utilisée pour prélever de la puissance sur le GG et ainsi fournir de la puissance électrique au réseau de bord en mode APU (Auxilary Power Unit) au sol pour le rechargement des batteries par exemple, ou en vol en complément ou en remplacement de la première machine électrique en cas de défaillance de celle-ci par exemple. Cela permet également de ralentir plus rapidement la vitesse de rotation du générateur de gaz lorsque cela s'avère nécessaire, par exemple en cas d'arrêt de la turbine à gaz. Par ailleurs, la puissance électrique ainsi générée sur la deuxième machine électrique peut être utilisée par la première machine électrique, via une connexion électrique entre la première machine électrique et la deuxième machine électrique.

Dans certains modes de réalisation, le dispositif comprend une unité de contrôle configurée pour contrôler la première machine électrique, la deuxième machine électrique, le moyen de blocage, le frein rotor et le crabot.

Le présent exposé concerne également un aéronef hybridé, notamment d'hélicoptère, comprenant une turbomachine ayant au moins un générateur de gaz, une turbine libre entraînée en rotation par un flux de gaz généré par le générateur de gaz, un rotor principal, et comprenant un dispositif de transmission selon l'un quelconque des modes de réalisation précédents. On comprend par « aéronef hybridé », un aéronef comprenant un moteur thermique permettant d'entrainer en rotation un rotor principal, et au moins une machine électrique permettant d'apporter de la puissance au moteur thermique.

Dans certains modes de réalisation, l'aéronef hybridé est un hélicoptère.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe d'une turbomachine selon l'invention,
[Fig. 2] La figure 2 représente schématiquement un premier mode de réalisation d'un dispositif de transmission de l'invention,
[Fig. 3A-3B] Les figures 3A et 3B représentent le dispositif de transmission de la figure 2, selon deux exemples d'un premier mode de fonctionnement,
[Fig. 4] La figure 4 représente le dispositif de transmission de la figure 2, selon un deuxième mode de fonctionnement,
[Fig. 5] La figure 5 représente le dispositif de transmission de la figure 2, selon un troisième mode de fonctionnement,
[Fig. 6] La figure 6 représente le dispositif de transmission de la figure 2, selon un quatrième mode de fonctionnement,
[Fig. 7] La figure 7 représente le dispositif de transmission de la figure 2, selon un cinquième mode de fonctionnement,
[Fig. 8A-8C] Les figures 8A à 8C représentent le dispositif de transmission de la figure 2, à différentes étapes d'un sixième mode de fonctionnement,
[Fig. 9] La figure 9 représente le dispositif de transmission de la figure 2, selon un septième mode de fonctionnement,
[Fig. 10] La figure 10 représente schématiquement un deuxième mode de réalisation d'un dispositif de transmission de l'invention,
[Fig. 11] La figure 11 représente le dispositif de transmission de la figure 10, selon un premier mode de fonctionnement,
[Fig. 12] La figure 12 représente le dispositif de transmission de la figure 10, selon un deuxième mode de fonctionnement,
[Fig. 13] La figure 13 représente le dispositif de transmission de la figure 10, selon un troisième mode de fonctionnement,
[Fig. 14] La figure 14 représente le dispositif de transmission de la figure 10, selon un quatrième mode de fonctionnement,
[Fig. 15] La figure 15 représente schématiquement un exemple d'un troisième mode de réalisation d'un dispositif de transmission de l'invention,
[Fig. 16] La figure 16 représente schématiquement un quatrième mode de réalisation d'un dispositif de transmission de l'invention,
[Fig. 17] La figure 17 représente schématiquement un mode de réalisation alternatif d'un dispositif de transmission de l'invention.

### Description des modes de réalisation

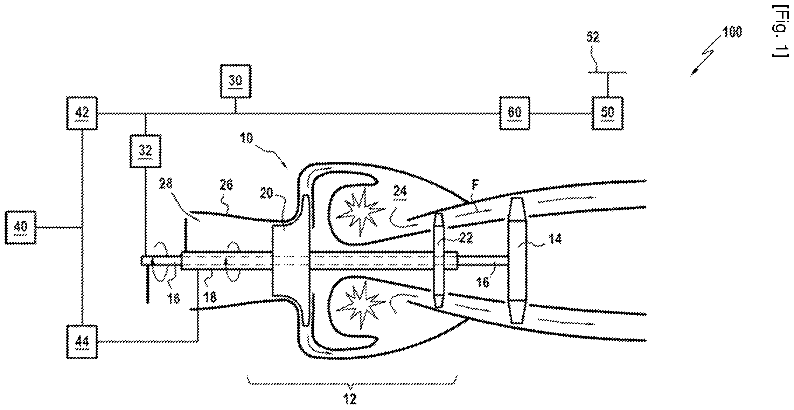

Un premier mode de réalisation de l'invention, correspondant à une première architecture du dispositif de transmission 1, va être décrit dans la suite de la description, en référence aux figures 1 à 9.

La figure 1 représente de façon schématique une turbomachine 100 conforme au présent exposé, destiné notamment à entraîner en rotation des organes de transmissions 50 d'un hélicoptère portant une hélice ou un rotor principal 52. La turbomachine 100 comprend une turbine à gaz 10 ayant un générateur de gaz 12 et une turbine libre 14 apte à être entraînée en rotation par un flux de gaz généré par le générateur de gaz 12. La turbine libre 14 est montée sur un arbre 16 qui transmet le mouvement de rotation à un organe récepteur tel un rotor principal 52 de l'hélicoptère par l'intermédiaire des organes de transmission 50. Selon cet exemple, la turbine à gaz 10 représentée sur la figure 1 est du type à prise de mouvement avant avec renvoi par arbre coaxial. On pourrait très bien considérer, sans sortir du cadre de la présente invention, une turbine à gaz à turbine libre du type à prise de mouvement avant avec renvoi par arbre interne ou extérieur, ou bien une turbomachine à turbine libre du type à prise de mouvement arrière.

Le générateur de gaz 12 comporte un arbre rotatif 18 sur lequel sont montés un compresseur 20 et une turbine 22, ainsi qu'une chambre de combustion 24 disposée axialement entre le compresseur 20 et la turbine dès lors que l'on considère le générateur de gaz 12 selon la direction axiale de l'arbre rotatif 18. La turbine à gaz 10 présente un carter 26 muni d'une entrée d'air 28 par laquelle l'air frais entre dans le générateur de gaz 12. Après son admission dans l'enceinte du générateur de gaz 12, l'air frais est comprimé par le compresseur 20 qui le refoule vers l'entrée de la chambre de combustion 24 dans laquelle il est mélangé avec du carburant. La combustion qui a lieu dans la chambre de combustion 24 provoque l'évacuation à grande vitesse des gaz brûlés vers la turbine 22, ce qui a pour effet d'entraîner en rotation l'arbre 18 du générateur de gaz 12 et, par conséquent, le compresseur 20. La vitesse de rotation de l'arbre 18 du générateur de gaz 12 est déterminée par le débit de carburant entrant dans la chambre de combustion 24.

Malgré l'extraction d'énergie cinétique par la turbine 22, le flux de gaz sortant du générateur de gaz présente une énergie cinétique significative. Comme on le comprend à l'aide de la figure 1, le flux de gaz F est dirigé vers la turbine libre 14 ce qui a pour effet de provoquer une détente dans la turbine libre 14 conduisant à la mise en rotation de la roue de turbine et de l'arbre 16.

Un dispositif de transmission 1 comporte une première machine électrique réversible 30 constituée en l'espèce d'un moteur électrique apte à fonctionner de manière réversible en génératrice électrique. On notera que bien que la première machine électrique réversible 30 puisse être disposée dans le périmètre turbomachine, cette disposition n'est pas limitative. La machine électrique réversible 30 peut en effet être disposée dans des périmètres de l'hélicoptère distincts de la turbomachine 100, sans sortir du cadre de l'invention. Cette remarque s'applique de manière générale à l'ensemble du dispositif de transmission comprenant également la deuxième machine électrique et les différents moyens de couplage décrits dans la suite de la description. La première machine électrique réversible 30 est couplée mécaniquement à l'arbre 16 de la turbine libre 14 par l'intermédiaire d'un premier moyen de couplage désactivable 32.

De préférence, le premier moyen de couplage désactivable 32 comprend une roue libre montée de telle sorte que la rotation de l'arbre 16 peut entraîner en rotation le rotor principal 52 et un arbre 38 de la première machine électrique 30 lorsque celle-ci fonctionne en mode génératrice afin de fournir de l'électricité, mais qu'au contraire, la rotation de l'arbre 38 de la première machine électrique 30 ne peut pas entraîner en rotation l'arbre 16 de la turbine libre 14. Autrement dit, la roue libre du premier moyen de couplage 32 ne peut transférer un couple de rotation que dans le sens de la turbine libre 14 vers le rotor principal 52 et la première machine électrique 30, mais pas l'inverse. Sur un hélicoptère, cette roue libre est couramment appelée "roue libre moteur". On notera que l'utilisation d'une roue libre pour les moyens de couplage désactivables n'est pas limitative, la roue libre pouvant être remplacée par tout système de crabot ou d'embrayage.

La première machine électrique 30 est également apte à être couplée au rotor principal 52 de telle manière que la première machine électrique 30, fonctionnant en mode moteur électrique, soit apte à entraîner en rotation le rotor principal 52. Comme indiqué ci-dessus, la première machine électrique 30 en mode moteur électrique peut entraîner en rotation le rotor principal 52, mais pas la turbine libre 14, compte tenu de la présence de la roue libre du premier moyen de couplage 32.

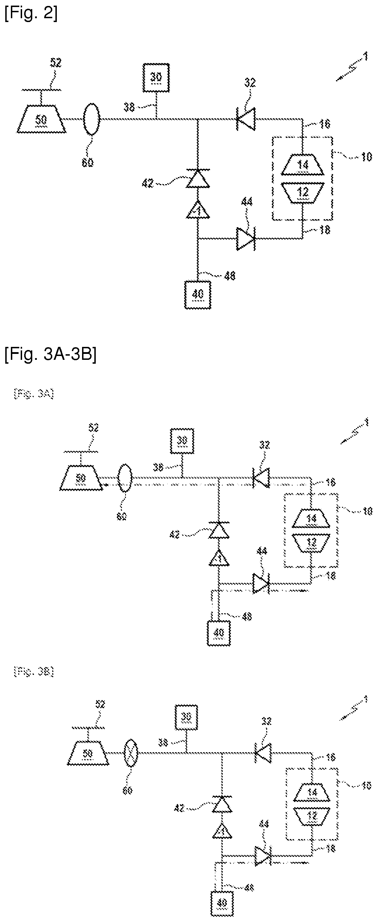

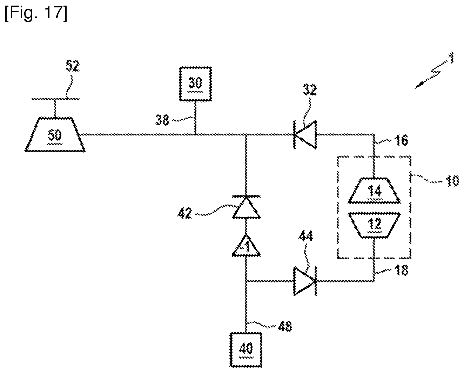

Le dispositif comprend de préférence un frein rotor 60 disposé entre la première machine électrique 30 et le rotor principal 52. Le frein rotor 60 est mobile entre une position de freinage (représentée par une croix sur la figure 3B par exemple), empêchant la rotation du rotor principal 52 et de la turbine libre 14, et une position libre permettant la rotation du rotor principal 52 et de la turbine libre 14. On notera toutefois que bien que les figures 1 à 16 représentent un dispositif comprenant un tel frein rotor 60, il est également possible de s'affranchir de l'utilisation de ce dernier, sans sortir du cadre de l'invention. En effet, la fonction de frein rotor peut également être remplie par la première machine électrique 30 qui, en étant pilotée de telle sorte à créer un couple s'opposant à la rotation du rotor principal 52, permet de freiner, voire bloquer ce dernier. Un tel mode de réalisation alternatif est représenté sur la figure 17, et est applicable à tous les modes de réalisation décrit dans la suite de l'exposé.

Le dispositif de transmission selon le présent exposé comprend en outre une deuxième machine électrique réversible 40, analogue à la première machine électrique réversible 30. La deuxième machine électrique réversible 40 est couplée mécaniquement à l'arbre 18 du générateur de gaz 12 par l'intermédiaire d'un deuxième moyen de couplage désactivable 44.

De préférence, le deuxième moyen de couplage désactivable 44 comprend une roue libre montée de telle sorte que la rotation d'un arbre 48 de la deuxième machine électrique réversible 40 peut entraîner en rotation l'arbre 18 du générateur de gaz 12 lorsque la deuxième machine électrique fonctionne en mode moteur électrique (deuxième moyen de couplage 44 activé), mais qu'au contraire, la rotation de l'arbre 18 du générateur de gaz 12 ne peut pas entraîner en rotation l'arbre 48 de la deuxième machine électrique réversible 40. Autrement dit, la roue libre du deuxième moyen de couplage 44 ne peut transférer un couple de rotation que dans le sens de la deuxième machine électrique 40 vers le générateur de gaz 12, mais pas l'inverse.

La deuxième machine électrique 40 est également apte à être couplée au rotor principal 52, par l'intermédiaire d'un troisième moyen de couplage réversible 42 analogue au premier et au deuxième moyens de couplage et comprenant de préférence une roue libre, de telle manière que la deuxième machine électrique 40, fonctionnant en mode moteur électrique (troisième moyen de couplage 42 activé), soit apte à entraîner en rotation le rotor principal 52.

Conformément au dispositif de transmission 1 du présent exposé, la deuxième machine électrique 40 est apte à tourner dans un premier sens de rotation dans lequel elle est couplée mécaniquement à l'arbre 18 du générateur de gaz 12, et dans un deuxième sens de rotation, opposé au premier sens de rotation, dans lequel elle est couplée mécaniquement au rotor principal 52. Par convention, on comprendra dans la suite de la description un sens positif, comme un sens de rotation de la deuxième machine électrique 40 dans lequel le deuxième moyen de couplage 44 est activé, et un sens négatif, comme un sens de rotation de la deuxième machine électrique 40 dans lequel le troisième moyen de couplage 42 est activé. En particulier, l'élément représenté par « -1 » sur la figure 2 et les figures suivantes représente des engrenages, par exemple des pignons, permettant l'inversion du sens de rotation. On comprendra ainsi que lorsque la deuxième machine électrique 40 tourne dans le sens positif, le deuxième moyen de couplage 44 peut être activé, et le troisième moyen de couplage 42 est désactivé, et lorsque la deuxième machine électrique 40 tourne dans le sens négatif, le deuxième moyen de couplage 44 est désactivé, et le troisième moyen de couplage 42 peut être activé.

Compte tenu de cette première architecture, différentes fonctions sont réalisables par le dispositif de transmission. Ces différentes fonctions sont décrites ci-dessous en référence aux figures 3A à 9. Sur ces figures, les flèches en traits interrompus représentent un sens de transmission de puissance mécanique ou électrique entre deux éléments. Sur la figure 3A par exemple, une puissance mécanique est transmise de la deuxième machine électrique 40 vers le générateur de gaz 12, et de la turbine libre 14 vers le rotor principal 52. On notera en outre de manière générale que, par souci de clarté, les figures 3A à 16 représentent schématiquement et de manière fonctionnelle et simplifiée les différents modes de fonctionnement du dispositif, sans représenter tous les détails des éléments constituant la turbomachine et les différents organes de transmission de puissance. En particulier, les pignons et éventuels rapports de vitesse ne sont pas représentés.

Les figures 3A et 3B représentent un mode de fonctionnement permettant le démarrage de la turbine à gaz 10. La deuxième machine électrique 40 est pilotée, par exemple par une unité de contrôle (non représentée), de manière à tourner dans le sens positif. Ainsi, il entraîne le générateur de gaz 12 par l'intermédiaire de la roue libre du deuxième moyen de couplage 44, permettant le démarrage du générateur de gaz 12. Lors du démarrage, les gaz chauds entrainent la turbine libre 14. Cette dernière, reliée au rotor principal 52 via la roue-libre du premier moyen de couplage 32, peut être soit libre, lorsque le frein rotor 60 est en position libre (figure 3A), soit bloquée par le frein rotor lorsque que celui-ci est en position de freinage (figure 3B). Cette dernière configuration, illustrée sur la figure 3B, peut être utile en cas de démarrage par vent fort. En outre, la puissance de la deuxième machine électrique 40 étant de l'ordre d'une ou plusieurs centaines de kilowatts, il est possible de démarrer la turbine beaucoup plus rapidement qu'avec un démarreur d'une puissance de l'ordre de 10kW, habituellement utilisée. Cela procure notamment un avantage opérationnel dans le cas de missions de type secours médical, ou lors des tentatives de redémarrage rapide en vol.

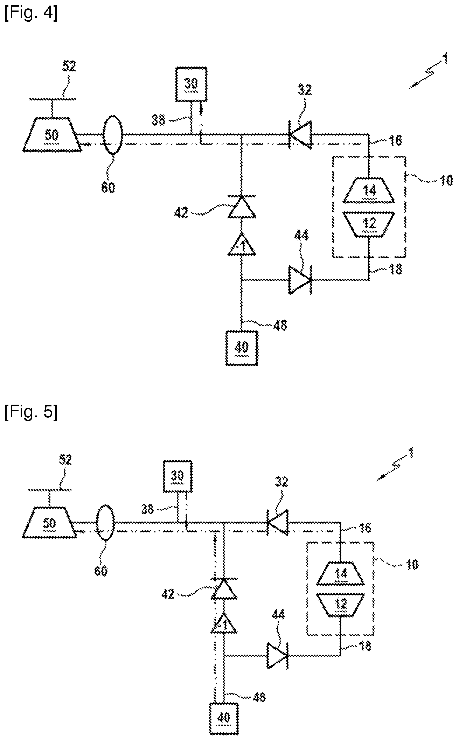

La figure 4 représente un fonctionnement nominal, c'est-à-dire en vol et en l'absence de panne, permettant à la première machine électrique 30 de fonctionner en mode génératrice électrique. Dans cette configuration, le générateur de gaz 12 fonctionne de manière autonome et n'est plus entraîné par la deuxième machine électrique 40. Par ailleurs, la turbine libre 14 entraîne le rotor principal 52 et la première machine électrique 30 par l'intermédiaire de la roue libre du premier moyen de couplage 32. La puissance électrique générée par la première machine électrique 30 peut être utilisée pour alimenter les accessoires électriques de bord ou charger la batterie.

La figure 5 représente un fonctionnement nominal permettant un apport de puissance au rotor principal 52 par la première machine électrique 30 et la deuxième machine électrique 40, chacune fonctionnant en mode moteur électrique. La deuxième machine électrique 40 tourne alors dans le sens négatif. Cette configuration peut être utile dans certaines phases de vol nécessitant un apport de puissance supplémentaire, par exemple au décollage. La première machine électrique 30 et la deuxième machine électrique 40 permettent ainsi de compléter la puissance apportée au rotor principal 52 par la turbine libre 14.

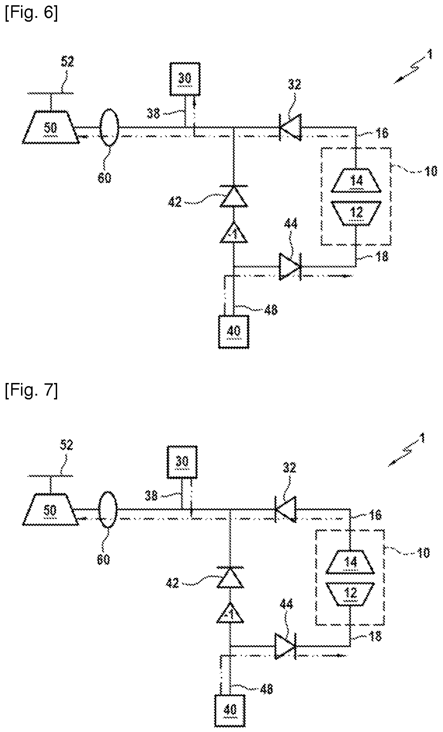

La figure 6 représente un fonctionnement nominal permettant à la première machine électrique 30 de fonctionner en mode génératrice électrique comme dans la configuration illustrée sur la figure 4, et permettant parallèlement un apport de puissance au générateur de gaz 12 par la deuxième machine électrique 40. La deuxième machine électrique 40 tourne alors dans le sens positif. Cette configuration peut être utile dans certaines phases de vol, par exemple pour l'assistance au générateur de gaz lors d'accélérations rapides, ou pour modifier le point de fonctionnement moteur dans des conditions d'utilisation en vol « haute altitude - temps chaud ».

La figure 7 représente un fonctionnement nominal permettant un apport de puissance à la fois au rotor principal 52 par la première machine électrique 30, et au générateur de gaz 12 par la deuxième machine électrique 40, chacune fonctionnant en mode moteur électrique. La deuxième machine électrique 40 tourne alors dans le sens positif. Ceci permet notamment une stratégie différente de la figure 6 pour l'assistance aux transitoires rapides, dans laquelle la machine éléctrique 30 assistance le rotor 52 pour limiter la chute de tour, tandis que la machine éléctrique 40 assiste le générateur de gaz 12 pour améliorer le temps de disponibilité de la puissance sur la turbine libre 14.

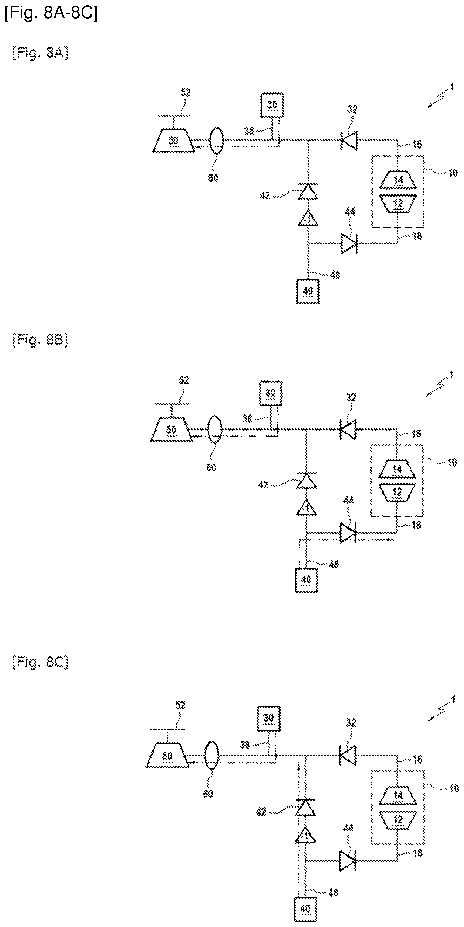

Les figures 8A à 8C présentent un mode de fonctionnement permettant un redémarrage de la turbine à gaz 10 en vol, en cas d'arrêt de celle-ci. L'arrêt de la turbine à gaz 10 entraîne une désynchronisation de la turbine libre 14 du rotor principal 52 via la roue libre du premier moyen de couplage 32. Immédiatement après la détection de l'arrêt de la turbomachine, la première machine électrique 30 fonctionne en mode moteur électrique pour fournir une puissance d'urgence au rotor principal 52 (figure 8A). La vitesse du générateur de gaz 12 diminue alors jusqu'à une fenêtre d'allumage, permettant le redémarrage de la turbomachine. Pendant ce temps, la deuxième machine électrique 40 peut avantageusement être mise en rotation dans le sens positif à une vitesse légèrement inférieure à la vitesse de rallumage. Cela permet de gagner du temps et de faciliter la resynchronisation de la roue libre du deuxième moyen de couplage 44.

Lorsque la fenêtre d'allumage est atteinte, la deuxième machine électrique 40 tournant dans le sens positif entraîne alors le générateur de gaz 12 par l'intermédiaire de la roue libre du deuxième moyen de couplage 44, permettant de redémarrer la turbine à gaz 10 (figure 8B).

Une fois la turbine à gaz 10 démarrée, la machine éléctrique 40 peut contribuer à la montée en régime rapide de la turbine à gaz pour réduire le temps de disponibilité de la puissance moteur. Dans une autre logique, lorsque la turbine à gaz 10 est autonome et en attendant la resynchronisation de la roue libre du premier moyen de couplage 32, la deuxième machine électrique 40 peut autrement être utilisée pour entrainer le rotor principal 52, en tournant dans le sens négatif, par l'intermédiaire du troisième moyen de couplage 42, et ainsi compléter l'apport de puissance de la première machine électrique 30 (figure 8C) pour limiter la perte de vitesse du rotor 52. La turbine libre 14 accélère et se resynchronise ainsi avec le rotor principal 52, permettant un retour à la situation nominale. Une fois la situation nominale retrouvée, les première et deuxième machines électriques 30, 40 peuvent stopper l'apport de puissance au rotor principal 52.

Cette architecture est particulièrement avantageuse en ce qu'elle permet, avec seulement deux machines électriques, de fournir à la fois de la puissance au rotor principal 52, par la première machine électrique 30 et la seconde machine électrique 40, tout en tout en permettant le redémarrage de la turbine à gaz 10 par la deuxième machine électrique 40 dans certaines phases de fonctionnement. On notera en outre que les différentes étapes décrites ci-dessus peuvent être réalisées par l'unité de contrôle (non représentée), permettant de détecter l'arrêt du moteur, la vitesse de rotation des arbres du générateur de gaz et de la turbine libre, et de contrôler les machines électriques.

En outre, dans le cas où le redémarrage en vol est impossible, ne fonctionne pas, ou n'est pas souhaité, par exemple, en cas d'incendie dans la turbine à gaz 10 ou de perte d'un roulement, les deux machines électriques 30 et 40 (tournant dans le sens négatif) peuvent fournir un apport de puissance au rotor principal 52 pour aider l'autorotation de celui-ci, voir permettre un vol de dégagement en palier avant l'atterrissage. Cette phase de vol est fonctionnellement équivalente à la configuration illustrée sur la figure 8C. Dans cette configuration, le rotor principal 52 bénéficie de l'intégralité de la puissance électrique disponible, fournie par les première et deuxième machine électriques 30, 40. De plus, en cas de défaillance d'une des machines électriques, la machine électrique restante est en capacité de fournir la moitié de la puissance électrique installée.

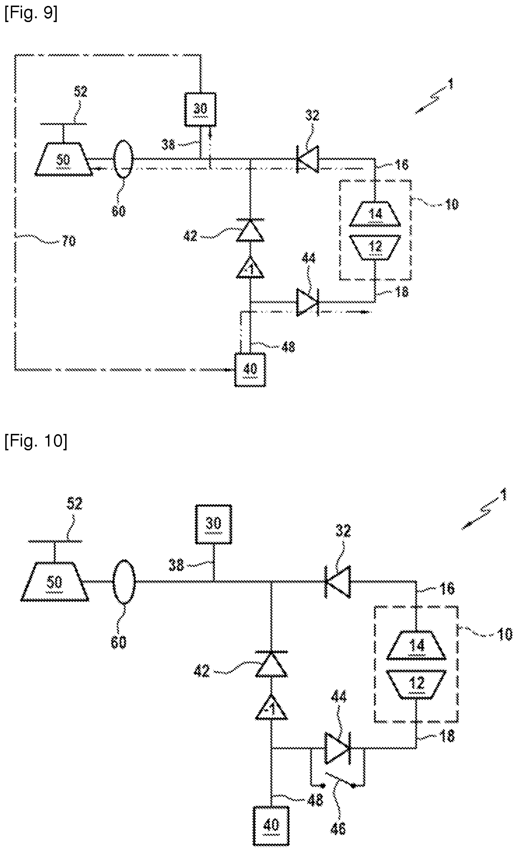

La figure 9 représente un fonctionnement nominal permettant à la première machine électrique 30 de fonctionner en mode génératrice électrique et permettant parallèlement un apport de puissance au générateur de gaz 12 par la deuxième machine électrique 40, comme dans la configuration illustrée sur la figure 6. En outre, la première machine électrique 30 est connectée électriquement à la deuxième machine électrique 40 par l'intermédiaire d'une connexion électrique 70. La connexion électrique 70 peut comporter des dispositifs de mise en forme électrique (redressement, onduleurs, conversion de tension). Cette connexion permet à la première machine électrique 30, connectée au rotor principal 52 et à la turbine libre 14, de prélever de la puissance électrique, et de la transmettre sous forme de courant électrique par l'intermédiaire de la connexion électrique 70 vers la deuxième machine électrique 40, qui la restitue alors au générateur de gaz 12, par l'intermédiaire du deuxième moyen de couplage 44 tournant dans le sens positif. Il est ainsi possible de transférer de la puissance électrique du rotor principal 52 au générateur de gaz 12, dans certaines phases de vol nécessitant un tel transfert.

Un deuxième mode de réalisation de l'invention, correspondant à une deuxième architecture du dispositif de transmission, va être décrit dans la suite de la description, en référence aux figures 10 à 14.

Selon cette deuxième architecture, le deuxième moyen de couplage désactivable 44 comprend également un moyen de blocage 46. Le moyen de blocage 46 est mobile entre une position libre dans laquelle le générateur de gaz 12 ne peut pas entraîner en rotation la deuxième machine électrique 40, et une position bloquée permettant de bloquer la roue libre du deuxième moyen de couplage désactivable 44 et ainsi de forcer le couplage entre le générateur de gaz 12 et la deuxième machine électrique 40. En d'autres termes, lorsque le moyen de blocage 46 est en position de blocage, le deuxième moyen de couplage 44 agit comme un arbre de telle sorte que le générateur de gaz 12 est apte à entraîner en rotation la deuxième machine électrique 40, malgré la présence de la roue libre du deuxième moyen de couplage désactivable 44. On notera que le changement de position du moyen de blocage 46 peut être réalisé par un composant électrique, pneumatique ou hydraulique et commandé par un utilisateur ou une unité de contrôle.

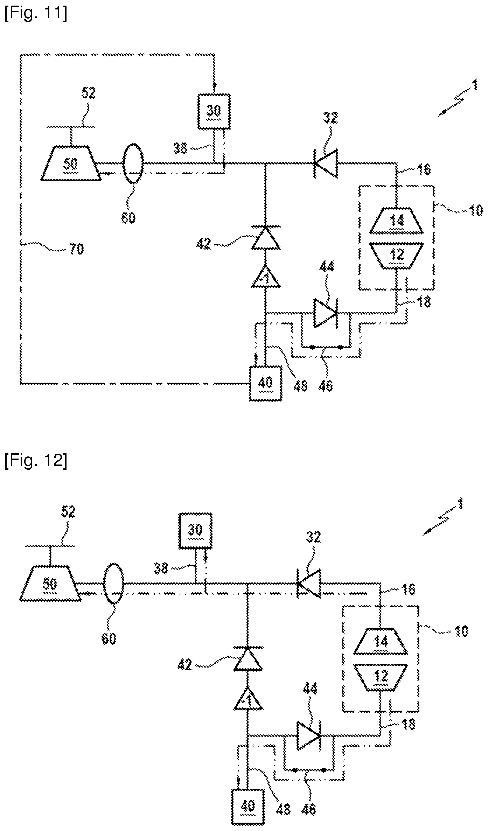

Hormis la présence de ce moyen de blocage 46, le dispositif de transmission selon le deuxième mode de réalisation est identique au dispositif de transmission selon le premier mode de réalisation décrit ci-dessus. Par conséquent, lorsque le moyen de blocage 46 est dans la position libre représentée schématiquement sur la figure 10, les fonctions réalisées par cette deuxième architecture sont les mêmes que les fonctions décrites ci-dessus, en référence à la première architecture. Les figures 11 à 14 présentent des fonctions réalisables par cette deuxième architecture, lorsque le moyen de blocage 46 est en position de blocage.

La figure 11 présente un fonctionnement permettant d'accélérer le redémarrage de la turbine à gaz 10 en vol, en cas d'arrêt de celle-ci. Le fonctionnement du dispositif, dans ce cas de figure, est identique à celui décrit ci-dessus en référence aux figures 8A à 8C. Cependant, grâce au moyen de blocage 46 permettant de bloquer la roue-libre du deuxième moyen de couplage 44, la deuxième machine électrique 40 peut être utilisée pour prélever de la puissance sur le générateur de gaz 12, et ainsi ralentir plus rapidement la vitesse de rotation du générateur de gaz 12, pour atteindre par conséquent plus rapidement la fenêtre d'allumage.

Par ailleurs, la puissance électrique ainsi générée sur la deuxième machine électrique 40 peut être avantageusement utilisée par la première machine électrique 30, par l'intermédiaire de la connexion électrique 70 entre la première machine électrique 30 et la deuxième machine électrique 40.

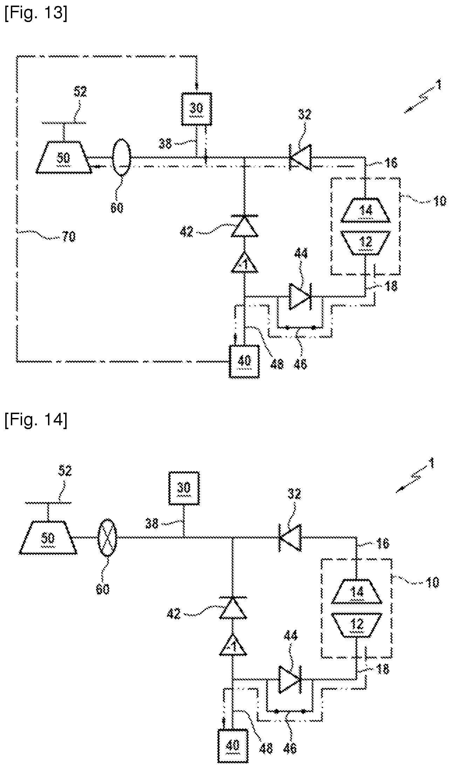

La figure 12 présente un fonctionnement permettant une génération électrique redondante à la fois sur la première machine électrique 30 et sur la deuxième machine électrique 40. En effet, II est parfois souhaitable que l'hélicoptère dispose de deux sources d'alimentation électriques redondantes. Ceci est possible en utilisant la deuxième machine électrique 40 comme source de génération auxiliaire, par l'intermédiaire de la roue-libre blocable, plus précisément du moyen de blocage 46 en position de blocage. L'utilisation de cette fonction pouvant par exemple se limiter au cas d'une défaillance de la machine électrique 30. La figure 13 présente un fonctionnement permettant un transfert de puissance électrique du générateur de gaz 12 vers le rotor principal 52. Dans ce cas, la deuxième machine électrique 40 est connectée au générateur de gaz 12 par l'intermédiaire de la roue libre du deuxième moyen de couplage 44, la roue libre étant bloquée par le moyen de blocage 46. La deuxième machine électrique 40 prélève ainsi de la puissance, transmise sous forme de courant électrique par l'intermédiaire de la connexion électrique 70 vers la première machine électrique 30 qui la restitue au rotor principal 52. On notera qu'avant le blocage de la roue libre du deuxième moyen de couplage 44, il est préférable de synchroniser les vitesses de part et d'autre de ladite roue-libre, en pilotant la vitesse de la deuxième machine électrique 40 par l'intermédiaire de l'unité de contrôle par exemple, en connaissant par ailleurs la vitesse du générateur de gaz 12 via le système de régulation moteur.

La figure 14 présente un fonctionnement permettant de générer de l'électricité au sol. Plus précisément, ce mode de fonctionnement, dit mode ou fonction « APU » (pour « Auxiliary Power Unit » en anglais) est un mode de fonctionnement où la turbine à gaz entraine une génératrice électrique sans entrainer le rotor principal de l'hélicoptère, pour permettre d'assurer l'alimentation des dispositifs électriques au sol, tels que des batteries, équipements de vol, chauffage ou climatisation. En particulier, ce mode permet de recharger les batteries qui pourront être utilisées en vol pour alimenter les machines électriques pour réaliser l'assistance électrique au rotor principal 52 dès la phase de décollage par exemple.

Pour réaliser cette fonction, le moyen de blocage 46 est en position de blocage pour que le générateur de gaz 12 puisse entrainer la deuxième machine électrique 40. La deuxième machine électrique 40 prélève ainsi de la puissance pour la restituer aux équipements électriques, tandis que la turbine libre 14 est bloquée par le frein rotor 60, alors en position de freinage.

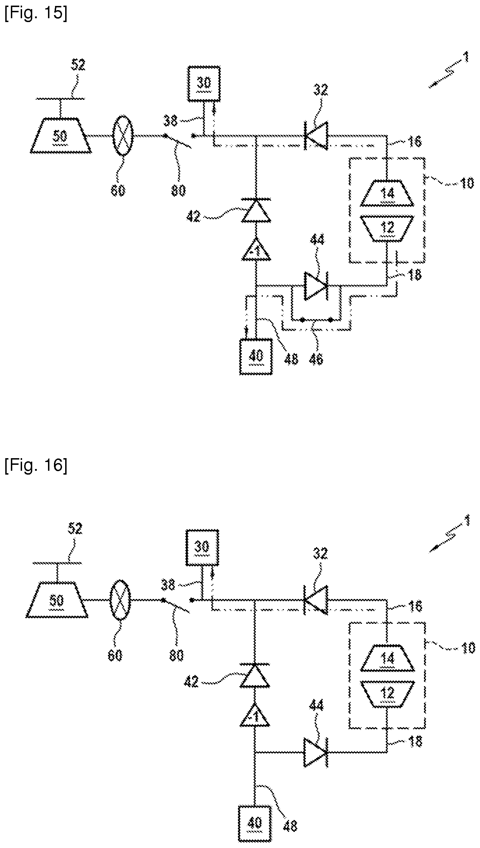

Un troisième mode de réalisation de l'invention, correspondant à une troisième architecture du dispositif de transmission, va être décrit dans la suite de la description, en référence à la figure 15.

La troisième architecture diffère de la deuxième architecture en ce que le dispositif de transmission comprend en outre un système d'accouplement 80, par exemple un crabot ou un embrayage. Le système d'accouplement 80 est mobile entre une position de couplage dans laquelle l'arbre 16 de la turbine libre 14 est couplé avec le rotor principal 52, et une position de découplage dans laquelle l'arbre 16 de la turbine libre 14 et le rotor principal sont découplés.

Lorsque le système d'accouplement 80 est dans la position de couplage (non représentée sur la figure 15), les fonctions réalisées par le dispositif selon cette troisième architecture sont les mêmes que celles décrites ci-dessus en référence à la deuxième architecture.

En outre, Les termes « amont » et « aval » se réfèrent au sens de circulation de l'énergie de la turbine libre 14 vers le rotor principal 52, en d'autres termes, au sens « turbine libre - rotor principal ».

La figure 15 illustre un premier exemple de la troisième architecture, présentant un fonctionnement permettant de générer de l'électricité au sol (mode « APU »). Pour réaliser cette fonction, le moyen de blocage 46 est en position de blocage, et le crabot 80 en position de découplage. Le générateur de gaz 12 entraine ainsi la deuxième machine électrique 40 via la roue libre bloquée du deuxième moyen de couplage 44. La deuxième machine électrique 40 prélève par conséquent de la puissance pour la restituer aux équipements électriques, tandis que la turbine libre 14 peut entrainer la première machine électrique 30. En effet, dans ce premier exemple, le crabot 80 est disposé en aval du couplage entre la première machine électrique 30 et la turbine libre 14.

La présence du crabot 80 à cette position permet l'utilisation du frein rotor 60, tout en permettant l'entrainement de la première machine électrique 30 par la turbine libre 14 pour générer de la puissance électrique. En effet, dans certaines phases opérationnelles au sol, il est nécessaire de pouvoir générer de la puissance électrique en maintenant le rotor principal 52 bloqué. Hors, sur certaines turbines à gaz, le fonctionnement avec turbine libre 14 bloquée peut endommager la celle-ci. Le découplage de la turbine libre 14 du rotor principal 52 par le crabot 80 permet de limiter cet inconvénient.

Un quatrième mode de réalisation de l'invention, correspondant à une quatrième architecture du dispositif de transmission, va être décrit dans la suite de la description, en référence à la figure 16.

La quatrième architecture est similaire à la première architecture, mais diffère de celle-ci en ce que le dispositif de transmission comprend en outre un crabot 80, disposé en aval du couplage entre la première machine électrique 30 et la turbine libre 14. Le crabot 80 de la quatrième architecture peut par ailleurs être identique au crabot 80 de la troisième architecture.

Lorsque le crabot 80 est en position de couplage, les fonctions réalisées par le dispositif selon la quatrième architecture sont identiques à celles réalisées par le dispositif selon la première architecture. En outre, selon cette quatrième architecture, lorsque le crabot 80 est en position de découplage, en mode « APU », la génération électrique n'est possible que par la première machine électrique 30.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Turbomachine pour aéronef hybridé, notamment d'hélicoptère, la turbomachine comportant au moins un générateur de gaz (12), une turbine libre (14) entraînée en rotation par un flux de gaz généré par le générateur de gaz, un rotor principal (52), et un dispositif de transmission (1) comprenant une première machine électrique réversible (30) couplée à un arbre (16) de la turbine libre (14) par l'intermédiaire d'un premier moyen de couplage désactivable (32), et au rotor principal (52), et une deuxième machine électrique réversible (40) couplée à un arbre (18) du générateur de gaz (12) par l'intermédiaire d'un deuxième moyen de couplage désactivable (44), et couplée au rotor principal (52) par l'intermédiaire d'un troisième moyen de couplage désactivable (42), la turbomachine étant **caractérisée en ce que** le deuxième moyen de couplage désactivable (44) est configuré pour être activé lorsque la deuxième machine électrique (40) tourne dans un premier sens de rotation, et le troisième moyen de couplage désactivable (42) est configuré pour être activé lorsque la deuxième machine électrique (40) tourne dans un deuxième sens de rotation opposé au premier sens de rotation.

2. Turbomachine selon la revendication 1, dans lequel les premier, deuxième et troisième moyens de couplage désactivables (32, 44, 42) comprennent une roue libre.

3. Turbomachine selon la revendication 1 ou 2, dans lequel la première machine électrique (30) est configurée pour fonctionner en mode génératrice, dans lequel elle est entraînée en rotation par des organes de transmission (50) et le rotor principal (52), eux-mêmes entrainés par la turbine libre (14) par l'intermédiaire du premier moyen de couplage (32), de manière à générer de l'énergie électrique, ou en mode moteur dans lequel elle apporte de la puissance au rotor principal (52).

4. Turbomachine selon l'une quelconque des revendications 1 à 3, comprenant un frein rotor (60) disposé entre la turbine libre (14) et le rotor principal (52) en étant mobile entre une position de freinage empêchant l'entrainement du rotor principal (52) par la turbine libre (14), et une position libre permettant l'entrainement du rotor principal (52) par la turbine libre (14).

5. Turbomachine selon la revendication 4, comprenant un crabot (80) disposé entre le frein rotor (60) et la turbine libre (14), le crabot (80) étant mobile entre une position de couplage dans laquelle l'arbre (16) de la turbine libre est couplé avec le rotor principal (52), et une position de découplage dans laquelle l'arbre (16) de la turbine libre et le rotor principal (52) sont découplés, la première machine électrique (30) étant couplée à la turbine libre (14) en amont du crabot (80), de manière à ce que la turbine libre (14) puisse apporter de la puissance électrique à la première machine électrique (30) même lorsque le crabot (80) est en position de découplage.

6. Turbomachine selon l'une quelconque des revendications 1 à 5, dans lequel la première machine électrique (30) est connectée électriquement à la deuxième machine électrique (40), de telle manière à ce que le dispositif soit apte à transférer de la puissance électrique du rotor principal (52) au générateur de gaz (12) par l'intermédiaire de la première machine électrique (30) et de la deuxième machine électrique (40) tournant dans le premier sens de rotation.

7. Turbomachine selon l'une quelconque des revendications 1 à 6, dans lequel le deuxième moyen de couplage (44) comprend un moyen de blocage (46) mobile entre une position libre dans laquelle le générateur de gaz (12) ne peut pas entraîner en rotation la deuxième machine électrique (40), et une position bloquée dans laquelle le générateur de gaz (12) entraîne en rotation la deuxième machine électrique (40), de manière à ce que la deuxième machine électrique (40) soit apte à prélever de la puissance électrique au générateur de gaz (12).

8. Turbomachine selon la revendication 7, configuré de telle sorte que la puissance électrique prélevée au générateur de gaz (12) par la deuxième machine électrique (40) est transférée à la première machine électrique (30).

9. Aéronef hybridé comprenant une turbomachine selon l'une quelconque des revendications précédentes.

10. Aéronef hybridé selon la revendication 9, l'aéronef hybridé étant un hélicoptère.

## Patentansprüche

1. Turbomaschine für ein hybrides Fluggerät, insbesondere einen Hubschrauber, wobei die Turbomaschine mindestens einen Gasgenerator (12), eine freie Turbine (14), die von einem durch den Gasgenerator erzeugten Gasstrom in Drehung versetzt wird, einen Hauptrotor (52) und eine Übertragungsvorrichtung (1) aufweist, die eine erste reversible elektrische Maschine (30) umfasst, die mit einer Welle (16) der freien Turbine (14) über ein erstes deaktivierbares Kopplungsmittel (32) und mit dem Hauptrotor (52) gekoppelt ist, und eine zweite reversible elektrische Maschine (40), die mit einer Welle (18) des Gasgenerators (12) über ein zweites deaktivierbares Kopplungsmittel (44) gekoppelt ist und mit dem Hauptrotor (52) über ein drittes deaktivierbares Kopplungsmittel (42) gekoppelt ist, wobei die Turbomaschine **dadurch gekennzeichnet ist, dass** das zweite deaktivierbare Kopplungsmittel (44) so ausgelegt ist, dass es aktiviert wird, wenn sich die zweite elektrische Maschine (40) in einer ersten Drehrichtung dreht, und das dritte deaktivierbare Kopplungsmittel (42) so ausgelegt ist, dass es aktiviert wird, wenn sich die zweite elektrische Maschine (40) in einer zweiten Drehrichtung dreht, die der ersten Drehrichtung entgegengesetzt ist.

2. Turbomaschine nach Anspruch 1, wobei das erste, zweite und dritte deaktivierbare Kopplungsmittel (32, 44, 42) einen Freilauf umfassen.

3. Turbomaschine nach Anspruch 1 oder 2, wobei die erste elektrische Maschine (30) so ausgelegt ist, dass sie im Generatormodus arbeitet, in dem sie durch Übertragungsorgane (50) und den Hauptrotor (52) in Drehung versetzt wird, die ihrerseits von der freien Turbine (14) über das erste Kopplungsmittel (32) angetrieben werden, so dass elektrische Energie erzeugt wird, oder im Motormodus, in dem sie dem Hauptrotor (52) Leistung zuführt.

4. Turbomaschine nach einem der Ansprüche 1 bis 3, die eine Rotorbremse (60) umfasst, die zwischen der freien Turbine (14) und dem Hauptrotor (52) angeordnet ist, indem sie zwischen einer Bremsposition, die den Antrieb des Hauptrotors (52) durch die freie Turbine (14) verhindert, und einer freien Position, die den Antrieb des Hauptrotors (52) durch die freie Turbine (14) gestattet, beweglich ist.

5. Turbomaschine nach Anspruch 4, die eine Klaue (80) umfasst, die zwischen der Rotorbremse (60) und der freien Turbine (14) angeordnet ist, wobei die Klaue (80) zwischen einer Kopplungsposition, in der die Welle (16) der freien Turbine mit dem Hauptrotor (52) gekoppelt ist, und einer Entkopplungsposition, in der die Welle (16) der freien Turbine und der Hauptrotor (52) entkoppelt sind, beweglich ist, wobei die erste elektrische Maschine (30) vor der Klaue (80) mit der freien Turbine (14) gekoppelt ist, so dass die freie Turbine (14) der ersten elektrischen Maschine (30) auch dann elektrische Leistung zuführen kann, wenn die Klaue (80) in der Entkopplungsposition ist.

6. Turbomaschine nach einem der Ansprüche 1 bis 5, wobei die erste elektrische Maschine (30) elektrisch mit der zweiten elektrischen Maschine (40) verbunden ist, so dass die Vorrichtung geeignet ist, elektrische Leistung vom Hauptrotor (52) zum Gasgenerator (12) über die erste elektrische Maschine (30) und die zweite elektrische Maschine (40) in erster Drehrichtung zu übertragen.

7. Turbomaschine nach einem der Ansprüche 1 bis 6, wobei das zweite Kopplungsmittel (44) ein Blockiermittel (46) umfasst, das zwischen einer freien Position, in der der Gasgenerator (12) die zweite elektrische Maschine (40) nicht in Drehung versetzen kann, und einer blockierten Position, in der der Gasgenerator (12) die zweite elektrische Maschine (40) in Drehung versetzen kann, beweglich ist, so dass die zweite elektrische Maschine (40) dem Gasgenerator (12) elektrische Leistung entnehmen kann.

8. Turbomaschine nach Anspruch 7, die so ausgelegt ist, dass die elektrische Leistung, die dem Gasgenerator (12) durch die zweite elektrische Maschine (40) entnommen wird, an die erste elektrische Maschine (30) übertragen wird.

9. Hybrides Luftfahrzeug, das eine Turbomaschine nach einem der vorhergehenden Ansprüche umfasst.

10. Hybrides Luftfahrzeug nach Anspruch 9, wobei das hybride Luftfahrzeug ein Hubschrauber ist.

## Claims

1. Turbomachine for a hybrid aircraft, particularly a helicopter, the turbomachine including at least one gas generator (12), a free turbine (14) rotationally driven by a stream of gas generated by the gas generator, a main rotor (52), and a transmission device (1) comprising a first reversible electric machine (30) coupled to a shaft (16) of the free turbine (14) by way of a first deactivatable coupling means (32), and to the main rotor (52), and a second reversible electric machine (40) coupled to a shaft (18) of the gas generator (12) by way of a second deactivatable coupling means (44), and coupled to the main rotor (52) by way of a third deactivatable coupling means (42), the turbomachine being **characterized in that** the second deactivatable coupling means (44) is configured to be activated when the second electric machine (40) rotates in a first direction of rotation, and the third deactivatable coupling means (42) is configured to be activated when the second electric machine (40) rotates in a second direction of rotation opposite to the first direction of rotation.

2. The turbomachine as claimed in claim 1, wherein the first, second and third deactivatable coupling means (32, 44, 42) comprise a free wheel.

3. The turbomachine as claimed in claim 1 or 2, wherein the first electrical machine (30) is configured to operate in generator mode, in which it is rotationally driven by transmission members (50) and the main rotor (52), themselves driven by the free turbine (14) by way of the first coupling means (32), in such a way as to generate electrical energy, or in motor mode in which it inputs power to the main rotor (52).

4. The turbomachine as claimed in any of claims 1 to 3, comprising a rotor brake (60) disposed between the free turbine (14) and the main rotor (52) by being movable between a braking position preventing the driving of the main rotor (52) by the free turbine (14), and a free position allowing the driving of the main rotor (52) by the free turbine (14).

5. The turbomachine as claimed in claim 4, comprising a dog clutch (80) disposed between the rotor brake (60) and the free turbine (14), the dog clutch (80) being movable between a coupling position in which the shaft (16) of the free turbine is coupled with the main rotor (52), and an uncoupling position in which the shaft (16) of the free turbine and the main rotor (52) are uncoupled, the first electric machine (30) being coupled to the free turbine (14) upstream of the dog clutch (80), in such a way that the free turbine (14) can input electrical power to the first electric machine (30) even when the dog clutch (80) is in the uncoupling position.

6. The turbomachine as claimed in any of claims 1 to 5, wherein the first electric machine (30) is electrically connected to the second electric machine (40), in such a way that the device is able to transfer electrical power from the main rotor (52) to the gas generator (12) by way of the first electric machine (30) and of the second electric machine (40) rotating in the first direction of rotation.

7. The turbomachine as claimed in any of claims 1 to 6, wherein the second coupling means (44) comprises a locking means (46) movable between a free position in which the gas generator (12) cannot rotationally drive the second electric machine (40), and a locked position in which the gas generator (12) rotationally drives the second electric machine (40), in such a way that the second electric machine (40) is able to draw electrical power off the gas generator (12).

8. The turbomachine as claimed in claim 7, configured such that the electrical power drawn off the gas generator (12) by the second electric machine (40) is transferred to the first electric machine (30).

9. A hybrid aircraft comprising a turbomachine as claimed in any of the preceding claims.

10. The hybrid aircraft as claimed in claim 9, the hybrid aircraft being a helicopter.
